# EUROPEAN PATENT APPLICATION

(11) **EP 3 993 226 A1**
(43) Date of publication of application: **04.05.2022**
(21) Application number: 21204942.3
(22) Date of filing: 27.10.2021
(51) Int. Cl.: H02K 1/20, H02K 5/20, H02K 9/19

(54) **COOLANT DISTRIBUTION RING FOR ELECTRIC MOTOR**

(30) Priority: 29.10.2020 DE 102020213634
(71) Applicant: Valeo Siemens eAutomotive Germany GmbH, 91056 Erlangen (DE)
(72) Inventor: Kosko, Patrik, 15500 Prague (CZ); Waider, Sebastian, 97616 Bad Neustadt a.d.Saale (DE); Austin, Marcus, 18600 Prague (CZ); Vano, Richard, 14700 Prague (CZ); Sluncík, Jaroslav, 14900 Prague (CZ); Jager, Jirí, 16900 Prague (CZ)

(57) **Abstract**

The invention concerns a stator of an electric rotating machine, the stator comprising a housing, a stator core (1), windings, and a distribution ring (2), the stator core (1) having inner and outer (11) longitudinal grooves, the outer longitudinal grooves (11) and the housing forming axial cooling channels configured to channel a coolant; the windings being located within the inner longitudinal grooves and forming at each end of the stator core (1) protruding windings ends, the distribution ring (2) being contiguous to the stator core (1) and comprising recesses (21) extending the outer longitudinal grooves (11), the recesses (21) being configured to guide the coolant from the outer longitudinal grooves (11) towards the protruding windings ends, such that the coolant flows over the protruding windings ends under the effect of gravity and/or due to the pressure of the coolant.to cool the protruding windings ends.

## Description

### FIELD OF THE INVENTION

The present invention belongs to the field of electric rotating machines configured to be on board of an automotive vehicle, such as an electric vehicle (EV) or a hybrid vehicle (HV).

The present invention relates in particular to the field of cooling systems integrated to electric rotating machines for cooling stator windings.

### BACKGROUND OF THE INVENTION

As is known, electric or hybrid vehicles comprise electrical systems which require a cooling system, in order to ensure a proper in-service operation of the electrical systems. Especially, electric or hybrid vehicles comprise in general an alternating current (AC) electrical motor which need to be cooled, due to heat loss being a limiting factor when targeting higher power levels.

In a general manner, the stator of the AC electrical motor comprises a stator core having inner longitudinal grooves, and stator windings. The stator windings, located within the inner longitudinal grooves, form at each end of the stator core protruding windings ends.

The stator windings and in particular the protruding windings ends need to be efficiently cooled. In this context, the objective of the present invention is to improve the cooling efficiency of the stator windings with an enhanced compacity of the stator.

### SUMMARY OF THE INVENTION

The objective of the invention is solved by means of a stator of an electric rotating machine particularly configured to be on board of an electric or a hybrid vehicle, the stator comprising: a housing, a stator core mounted in the housing and having inner and outer longitudinal grooves respectively on an inner and on an outer circumference of the stator core, the outer longitudinal grooves and the housing forming axial cooling channels configured to channel a coolant, windings located within the inner longitudinal grooves and forming at each end of the stator core protruding windings ends, and a distribution ring having an annular section, arranged coaxially with respect to the stator core and being contiguous to the stator core; wherein the distribution ring comprises recesses providing an extension of the outer longitudinal grooves, the recesses being configured to guide the coolant from the outer longitudinal grooves towards the protruding windings end, such that the coolant flows over the protruding windings ends under the effect of gravity and/or due to the pressure of the coolant to cool the protruding windings ends..

The stator core, mounted in the housing, has inner and outer longitudinal grooves respectively on an inner and on an outer circumference of the stator core. The outer longitudinal grooves and the housing form axial cooling channels configured to channel a coolant.

The windings, located within the inner longitudinal grooves, form at each end of the stator core protruding windings ends which need to be cooled.

The distribution ring has an annular section and is coaxial and contiguous with respect to the stator core. Moreover, the distribution ring comprises recesses providing an extension of the outer longitudinal grooves. The recesses are configured to guide the coolant from the outer longitudinal grooves towards the protruding windings ends. In other words, the distribution ring is axially shifting a cooling outlet from the outer longitudinal grooves to better reach the protruding windings ends. In this manner, the coolant flows over the protruding windings ends under the effect of gravity and/or due to the pressure of the coolant to cool the protruding windings ends. In particular when providing a proper sealing and an appropriate pressure of the coolant, it is possible to have the cooling effect on the entire circumference of the distribution ring. The coolant is a cooling fluid, for instance, an oilm

Consequently, the present invention makes it possible to use a cooling circuit of the stator core to cool also the protruding windings ends, increasing the compacity of the electric rotating machine.

Advantageously, the distribution ring comprises a peripheral face on an opposite side relative to the stator core. The recesses comprise preferably at least one radial outlet formed therethrough and/or an unobstructed edge on the peripheral face. Then, the recesses are configured to channel the coolant towards the protruding windings ends through the at least one radial outlet and/or over the unobstructed edge.

Advantageously, a section of the recesses is higher than a section of the outer longitudinal grooves. Moreover, a diameter of the at least one radial outlet may be small compared to the section of the recesses. Thus, the recesses act as a buffer for an improved flow control of the coolant.

The recesses may comprise the unobstructed edge, two side walls, and a bottom wall. The bottom wall has advantageously a downward slope to ease a coolant flow.

The recesses may comprise a radial outlet of the at least one radial outlet, the unobstructed edge, and two side walls. Advantageously, the two side walls form a V-shape and a junction of the V-shape have a downward slope to ease the coolant flow.

The recesses may comprise the at least one radial outlet, two side walls, a bottom wall, and a peripheral wall closing the recesses on the peripheral face. Then, the peripheral wall allows an improved control of the coolant flow. Moreover, the at least one radial outlet consists preferably in a number of radial outlets distributed along a ring width of the distribution ring. This allows to ensure a cooling of the protruding windings ends at a number of axial positions corresponding to the number of radial outlets, preferably equal to three.

A first and a second recesses may both be aligned with a same outer longitudinal groove. The first and the second recesses are radially separated from one another. Furthermore, the first and the second recesses comprise respectively a first and a second radial outlets. The first and the second radial outlets are respectively positioned at a first and at a second axial positions spaced apart from one another. Thus, the coolant cools the protruding windings ends respectively at the first and at the second axial positions. In the fifth embodiment of the invention, a first and a second juxtaposed rings form the distribution ring. Then, the first and the second juxtaposed rings are fixed together and comprise respectively the first and the second radial outlets.

The distribution ring may comprise a top wall on an outer circumference, such that the top wall covers the recesses.

Advantageously, the distribution ring comprises an upper part, only the upper part comprising the recesses.

Advantageously, the distribution ring comprises an outlet cooling system located on a lower part of the distribution ring. The outlet cooling system is configured to evacuate the coolant from the distribution ring.

Advantageously, the distribution ring is made out of a non-magnetic and a non-electric conductive material, preferably a plastic material. Thus, a clearance distance requirement between the distribution ring and the protruding windings ends is reduced, increasing a compacity of the electric rotating machine. Moreover, a plastic material is less costly.

Advantageously, the windings comprise a set of rectangular wire bundles arranged with interstices in between them. Thus, the coolant may flow in between the protruding windings ends, improving a cooling efficiency of the protruding windings ends.

Advantageously, the electric rotating machine comprises a rotor and the stator. Furthermore, the stator comprises the stator core, the protruding windings ends, and the two distributions rings positioned at both sides of the stator core. Thus, the two distributions rings cool the protruding windings ends.

One aspect of the present invention is an electric drive comprising an inverter configured to convert a dc voltage into an ac voltage and the inventive electric rotating machine driven by the inverter.

One aspect of the present invention is a vehicle comprising the electric drive for driving the vehicle.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 illustrates a view of a stator according to a first embodiment of the invention;
Figure 2 illustrates a partial view of the stator according to the first embodiment of the invention;
Figure 3 illustrates a view of a distribution ring according to the first embodiment of the invention;
Figure 4 illustrates a view of a distribution ring according to a second embodiment of the invention;
Figure 5 illustrates a view of a distribution ring according to a third embodiment of the invention;
Figure 6 illustrates a view of a distribution ring according to a fourth embodiment of the invention;
Figure 7 illustrates a view of a distribution ring according to a fifth embodiment of the invention;
Figure 8 illustrates a view of a distribution ring according to a sixth embodiment of the invention;
Figure 9 illustrates a cross-sectional view of an electric rotating machine according to the third embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

The invention relates to a stator of an electric rotating machine configured to be on board of an electric or a hybrid vehicle, without this limiting the scope of the present invention. The stator refers to a fixed part of the electric rotating machine.

Hereafter is provided a general description of the invention.

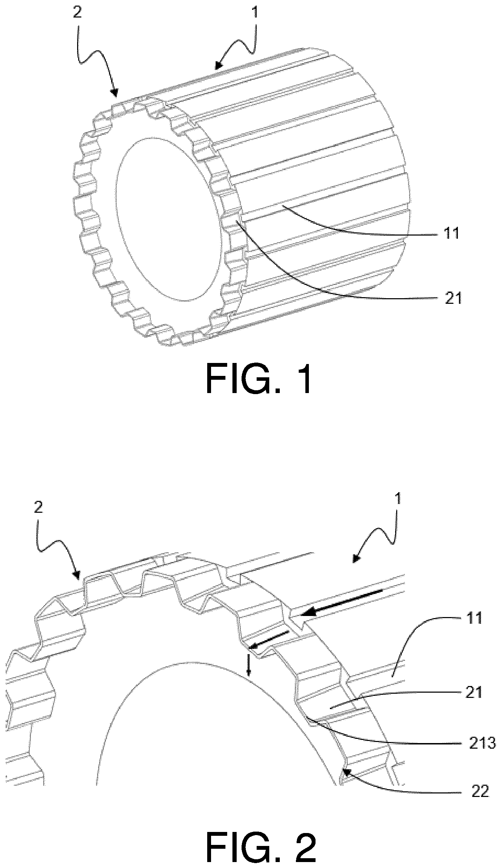

As illustrated in Figure 1, the stator according to the invention comprises a housing, a stator core 1, windings, and a distribution ring 2. The stator core 1, mounted in the housing, has inner and outer 11 longitudinal grooves respectively on an inner and on an outer circumference of the stator core 1. The outer longitudinal grooves 11 and the housing form axial cooling channels configured to channel a coolant. The windings, located within the inner longitudinal grooves, form at each end of the stator core 1 protruding windings ends 3. Notably, the stator core 1 and the protruding windings ends 3 need to be cooled.

The distribution ring 2, having an annular section, is coaxial and contiguous with respect to the stator core 1. In reference to Figure 2, the distribution ring 2 comprises recesses 21 the presence of which allows to extend the outer longitudinal grooves 11. The recesses 21 are then configured to guide the coolant from the outer longitudinal grooves 11 towards the protruding windings ends 3. In other words, the distribution ring 2 is axially shifting a cooling outlet from the outer longitudinal grooves 11 to better reach the protruding windings ends 3. In this manner, the coolant flows over the protruding windings ends 3 under the effect of gravity to cool the protruding windings ends 3. In addition or altern atively, particular when providing a proper sealing and an appropriate pressure of the coolant, it is possible to have the cooling effect on the entire circumference of the distribution ring. The Figures 1 to 8 represent a schematic flowing path of the coolant, usually an oil.

The distribution ring 2 is described in details hereafter.

Advantageously, in reference to Figures 2 to 8, the distribution ring 2 comprises a peripheral face 22 on an opposite side relative to the stator core 1. The recesses 21 comprise, in an advantageous manner, at least one radial outlet 212 formed therethrough and/or an unobstructed edge 213 on the peripheral face 22. Then, the recesses 21 are configured to channel the coolant towards the protruding windings ends 3 through the at least one radial outlet 212 and/or over the unobstructed edge 213. Advantageously, a section of the recesses 21 is higher than a section of the outer longitudinal grooves 11. Moreover, a diameter of the at least one radial outlet 212 may be small compared to the section of the recesses 21. Thus, the recesses 21 act as a buffer for an improved flow control of the coolant.

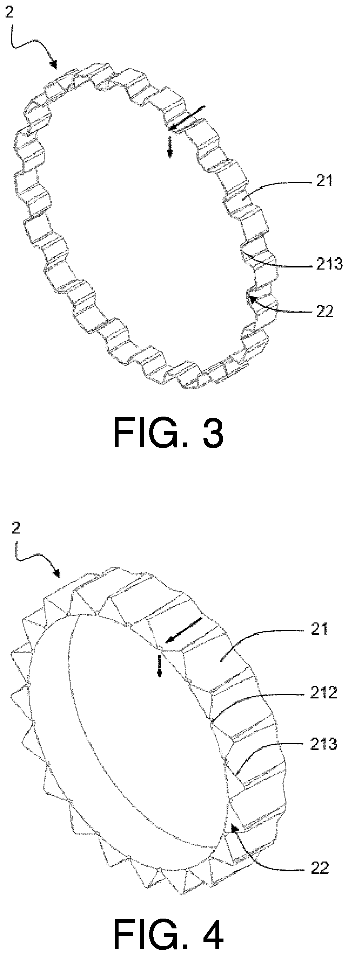

As illustrated in Figures 2 and 3, according to a first embodiment of the invention, the recesses 21 comprise the unobstructed edge 213, two side walls, and a bottom wall. The bottom wall has advantageously a downward slope to ease a coolant flow. In the first embodiment of the invention, the coolant flows from the outer longitudinal grooves 11 inward the recesses 21, and falls outward the recesses 21 over the unobstructed edge 213.

As illustrated in Figure 4, according to a second embodiment of the invention, the recesses 21 comprise a radial outlet of the at least one radial outlet 212, the unobstructed edge 213, and two side walls. Advantageously, the two side walls form a V-shape and a junction of the V-shape have a downward slope to ease the coolant flow. In the second embodiment of the invention, the coolant flows from the outer longitudinal grooves 11 inward the recesses 21, and falls outward the recesses 21 through the radial outlet and over the unobstructed edge 213.

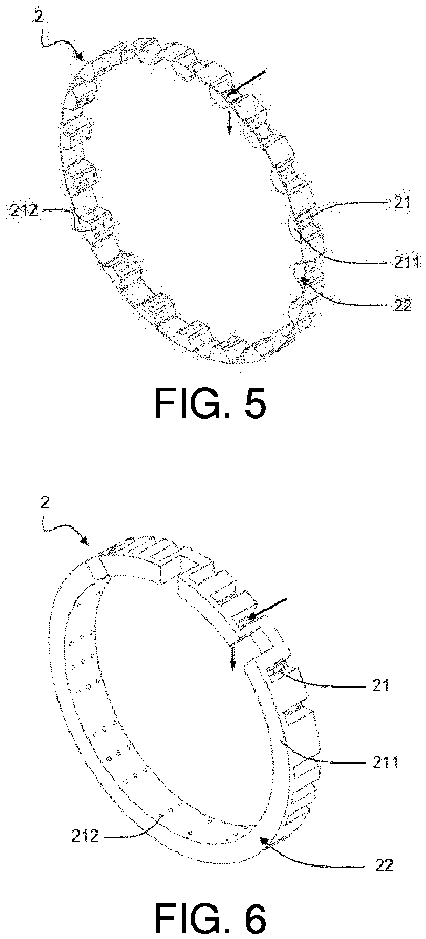

As illustrated in Figures 5 and 6, according to a third and a fourth embodiments of the invention, the recesses 21 comprise the at least one radial outlet 212, two side walls, a bottom wall, and a peripheral wall 211 closing the recesses 21 on the peripheral face 22. The peripheral wall 211 allows, advantageously, an improved control of the coolant flow.

In the third and the fourth embodiments of the invention, the at least one radial outlet 212 consists in a number of radial outlets distributed along a ring width of the distribution ring 2. This allows to ensure a cooling of the protruding windings ends 3 at a number of axial positions corresponding to the number of radial outlets, preferably equal to three. Advantageously, each one of the at least one radial outlet 212 consists in a bore. In the described third and fourth embodiments of the invention, the coolant flows from the outer longitudinal grooves 11 inward the recesses 21, and falls outward the recesses 21 through the number of radial outlets.

Moreover, a wall thickness of the distribution ring 2 may be adapted. The wall thickness results from a compromise between a desired mechanical strength and a desired weight and occupied space of the distribution ring 2. As an example, the wall thickness of the distribution ring 2 according to the third embodiment of the invention, in reference to Figure 5, is lower than the wall thickness of the distribution ring 2 according to the fourth embodiment of the invention, in reference to Figure 6.

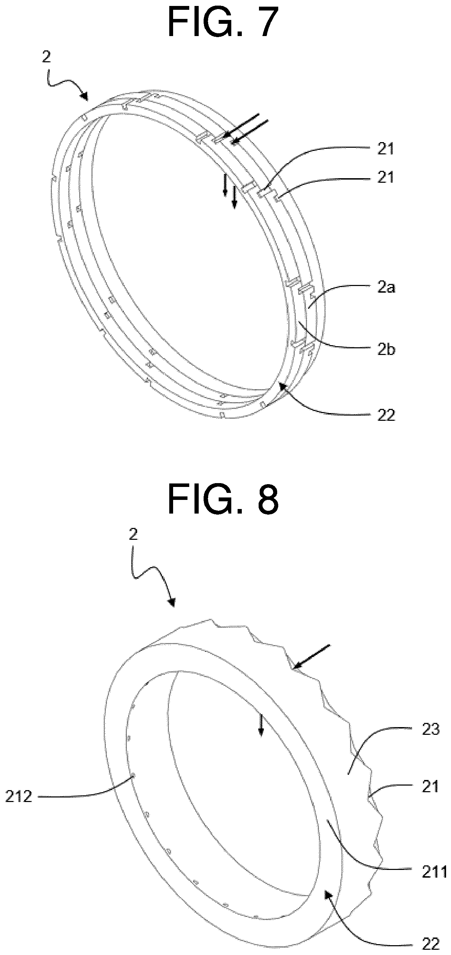

As illustrated in Figure 7, according to a fifth embodiment of the invention, a first and a second recesses are both aligned with a same outer longitudinal groove. The first and the second recesses are radially separated from one another. In the fifth embodiment of the invention, the first and the second recesses comprise respectively a first and a second radial outlets. The first and the second radial outlets are respectively positioned at a first and at a second axial positions spaced apart from one another. Thus, the coolant cools the protruding windings ends 3 respectively at the first and at the second axial positions. In the fifth embodiment of the invention, a first 2a and a second 2b juxtaposed rings form the distribution ring 2. The first 2a and the second 2b juxtaposed rings are fixed together and comprise respectively the first and the second radial outlets.

In the described fifth embodiment of the invention, the coolant flows from the outer longitudinal grooves 11 inward the first and the second recesses, and falls outward the first and the second recesses through respectively the first and the second radial outlets. The first and the second radial outlets may have a parallelepiped shape.

As illustrated in Figure 8, according to a sixth embodiment of the invention, the distribution ring 2 comprises a top wall 23 on an outer circumference, such that the top wall 23 covers the recesses 21. Furthermore, the distribution ring 2 according to the sixth embodiment comprises advantageously the peripheral wall 211 and the at least one radial outlet 212.

Furthermore, the distribution ring 2 may comprise an upper part and a lower part. In an advantageous manner, only the upper part comprises the recesses 21. Moreover, the lower part advantageously comprises an outlet cooling system configured to evacuate the coolant from the distribution ring 2.

In an advantageous manner, the distribution ring 2 is made out of a non-magnetic and a non-electric conductive material, preferably a plastic material. The use of the non-magnetic and the non-electric conductive material allows reducing a clearance distance requirement between the distribution ring 2 and the protruding windings ends 3. The clearance distance requirement needs to be respected in order to avoid a perturbation of the protruding windings ends 3 by an electromagnetic interference phenomenon. Furthermore, a reduced clearance distance makes it possible to reduce a size of the housing and thus a related cost, and to increase a compacity of the electric rotating machine.

The distribution ring 2 is preferably manufactured using an injection molding method.

The stator and the electric rotating machine are described hereafter.

The windings preferably comprise a set of rectangular wire bundles arranged with interstices in between them. Thus, the coolant may flow in between the protruding windings ends 3. Then, the coolant is in contact with a larger surface of the protruding windings ends 3 compared to the windings arranged in a unique circular wire bundle. Hence, such windings formed by the set of rectangular wire bundles improve a cooling efficiency of the protruding windings ends 3.

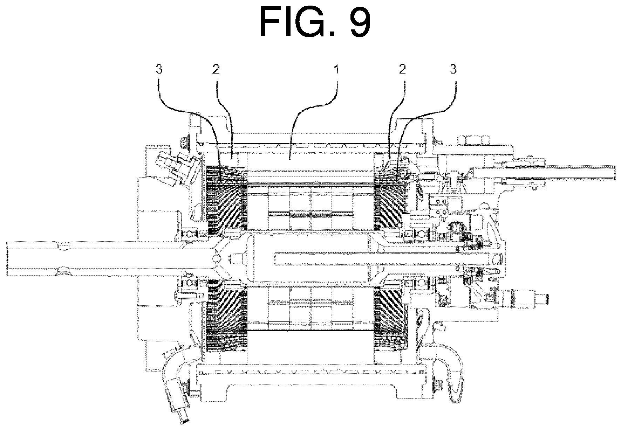

As illustrated in Figure 9, the electric rotating machine comprises a rotor and the stator. As presented previously, the stator comprises the stator core 1, the protruding windings ends 3, and two distributions rings positioned at both sides of the stator core 1. Thus, the two distributions rings cool the protruding windings ends 3. An embodiment of either one of the two distribution rings may differ from an embodiment of the other one of the two distribution rings.

Although embodiments have been described with reference to a number of illustrative embodiments thereof, it should be understood that numerous other modifications and embodiments can be devised by those skilled in the art that will fall within the spirit and scope of the principles of this disclosure.

The technical advantages of the present invention will now be detailed.

In a nutshell, the present invention relates to the stator configured to be integrated in the electric rotating machine. The present invention makes it possible to use a cooling circuit of the stator core to cool also the protruding windings ends. Thus, the present invention allows to increase at least partially a compacity of the electric rotating machine. Moreover, the present invention prevents from the apparition of hot-spots in the protruding windings ends leading to a possible premature thermal failure of the protruding windings ends.

Advantageously, the present invention contributes to a cost efficiency of the electric rotating machine. The distribution ring being independent from the housing of the electric rotating machine, the distribution ring may consist in a cheaper material than the housing, for example a plastic material.

Moreover, in an advantageous manner, the use of a non-magnetic and/or non-electric conductive material for the distribution ring reduces a clearance distance between the distribution ring and the protruding windings ends. Thus, the present invention allows saving space and requires a smaller housing compared to cooling solutions using magnetic and/or electric conductive materials. Hence, the present invention contributes to the cost efficiency, to reduce the weight, and to increase the compacity of the electric rotating machine.

In an advantageous manner, the present invention offers the possibility to mount the distribution ring during a later stage of a manufacturing method of the electric rotating machine. Thus, the present invention offers flexibility in the manufacturing method of the electric rotating machine.

## Claims

1. A stator of an electric rotating machine particularly configured to be on board of an electric or a hybrid vehicle, the stator comprising:
- a housing;
- a stator core (1) mounted in the housing and having inner and outer (11) longitudinal grooves respectively on an inner and on an outer circumference of the stator core (1), the outer longitudinal grooves (11) and the housing forming axial cooling channels configured to channel a coolant;
- windings located within the inner longitudinal grooves and forming at each end of the stator core (1) protruding windings ends (3);
- a distribution ring (2) having an annular section, arranged coaxially with respect to the stator core (1) and being contiguous to the stator core (1);
wherein the distribution ring (2) comprises recesses (21) providing an extension of the outer longitudinal grooves (11), the recesses (21) being configured to guide the coolant from the outer longitudinal grooves (11) towards the protruding windings ends (3), such that the coolant flows over the protruding windings ends (3) under the effect of gravity and/or due to the pressure of the coolant.to cool the protruding windings ends (3)

2. The stator as claimed in claim 1, the distribution ring (2) comprising a peripheral face (22) on an opposite side relative to the stator core (1), wherein the recesses (21) comprise at least one radial outlet (212) formed therethrough and/or an unobstructed edge (213) on the peripheral face (22), the recesses (21) being configured to channel the coolant towards the protruding windings ends (3) through the at least one radial outlet (212) and/or over the unobstructed edge (213).

3. The stator as claimed in the previous claim, the distribution ring (2) comprising a ring width, wherein the at least one radial outlet (212) consists in a number of radial outlets distributed along the ring width so as to ensure a cooling of the protruding windings ends (3) at a number of axial positions corresponding to the number of radial outlets.

4. The stator as claimed in the previous claim, wherein the number of radial outlets is equal to three.

5. The stator as claimed in the claims 2 to 4, wherein the recesses (21) comprise a peripheral wall (211) closing the recesses (21) on the peripheral face (22).

6. The stator as claimed in the claims 1 or 2, wherein a first and a second recesses radially separated from one another are both aligned with a same outer longitudinal groove, the first and the second recesses comprising respectively a first and a second radial outlets respectively positioned at a first and at a second axial positions spaced apart from one another so as to cool the protruding windings ends (3) respectively at the first and at the second axial positions.

7. The stator as claimed in the previous claim, wherein a first (2a) and a second (2b) juxtaposed rings form the distribution ring (2), the first (2a) and the second (2b) juxtaposed rings comprising respectively the first and the second radial outlets.

8. The stator as claimed in any of the previous claim, wherein the distribution ring (2) comprises a top wall (23) on an outer circumference, the top wall (23) covering the recesses (21).

9. The stator as claimed in the any of the previous claims, wherein the distribution ring (2) comprises an upper part, only the upper part comprising the recesses (21).

10. The stator as claimed in any of the previous claims, wherein the distribution ring (2) comprises an outlet cooling system located on a lower part of the distribution ring (2) configured to evacuate the coolant from the distribution ring (2).

11. The stator as claimed in any of the previous claims, wherein the windings comprise a set of rectangular wire bundles arranged with interstices in between them such that to allow the coolant to flow in between the protruding windings ends (3).

12. An electric rotating machine comprising a rotor and the stator as claimed in any of the previous claims, wherein the stator comprises the stator core (1), the protruding windings ends (3), and the two distributions rings positioned at both sides of the stator core (1) such that the two distributions rings cool the protruding windings ends (3).
